# EUROPÄISCHE PATENTANMELDUNG

(11) **EP 2 720 168 A1**
(43) Veröffentlichungstag der Anmeldung: **16.04.2014**
(21) Anmeldenummer: 12188565.1
(22) Anmeldetag: 15.10.2012
(51) Int. Cl.: G06F 21/44, H04L 12/58, H04L 29/06

(54) **System und Verfahren zum Freigeben einer Datenverbindung zwischen einem Endgerät und einem Gateway eines E-Mail-Servers**

(71) Anmelder: Amagu GmbH, 85748 Garching (DE)
(72) Erfinder: Kobler, Armin, 85652 Pliening (DE)
(74) Vertreter: Ganahl, Bernhard

(57) **Zusammenfassung**

Die Erfindung betrifft ein System und ein Verfahren zum Freigeben einer Datenverbindung zwischen einem Endgerät und einem Gateway eines E-Mail-Servers. Hierzu ist ein Filter vorgesehen, der einen Standard-Web-Server über eine Programmschnittstelle (API) gekoppelt ist. Eine vom Filter freigegebene Verbindungsanfrage wird an das Gateway zur Durchführung der weiteren Kommunikation mit dem jeweiligen Endgerät weitergeleitet. Die Autorisierungsprüfung der Verbindungsanfrage umfasst zumindest die Prüfung eines für das jeweilige Endgerät spezifischen Codes.

Bei der Durchführung der Autorisierungsprüfung wird auf vorgehaltene Daten zum Verbindungsstatus der einzelnen Endgeräte zugegriffen. Diese Daten werden vorzugsweise auf einem unabhängigen DMS-Server gesammelt und in einer konsolidierten Liste zusammengefasst.

## Beschreibung

Die Erfindung betrifft ein System und ein Verfahren zum Freigeben einer Datenverbindung zwischen einem Endgerät und einem Gateway eines E-Mail-Servers.

Die zurzeit am meist verbreiteten E-Mail-Server sind Microsoft^{®} Exchange und IBM^{®} Lotus Domino. Für beide Server gibt es Gateways, die die Kommunikation zu mobilen Endgeräten durchführen und die Daten zwischen den mobilen Endgeräten dem jeweiligen Server synchronisieren. Das entsprechende Gateway von Microsoft^{®} wird als Microsoft^{®} CAS (Client Access Services für Exchange) bezeichnet. Zu diesem Gateway sind Dienste erhältlich, mit welchen mobile Endgeräte mittels des ActiveSync^{®}-Protokolls authentifiziert werden können, wobei diese Funktionen auch die Authentifizierung von mobilen Endgeräten mittels endgerätspezifischer Codes, wie z.B. einer Device ID, IMEI beinhalten.

In den meisten Anwendungen ist es üblich, dass an einem Server der jeweilige Benutzer mittels Benutzername und Passwort authentifiziert wird, jedoch nicht das Endgerät. Die Authentifizierung eines Benutzers ist in der Regel unkompliziert und einfach. In Unternehmen, in denen die Benutzer mehrere Endgeräte betreiben und sich an allen Endgeräten mit dem gleichen Benutzernamen und dem gleichen Passwort am Server anmelden, ist eine solche Art der Zugangsverwaltung zum Server nicht optimal, da unterschiedliche Gerätetypen unterschiedliche Zugangskontrollen benötigen. Mobile Endgeräte, die von dem Benutzer verloren werden können, unterliegen wesentlich strengeren Sicherheitsanforderungen als im bewachten Firmengebäude angeordnete stationäre Computer. Weiterhin werden Smartphones oft mit vielen privaten Anwendungen zum Austauschen von Bildern, Spielen oder dergleichen versehen, die die gleichen Benutzer üblicherweise nicht auf ihren Laptop laden. Zudem ist die Gefahr eines bewussten oder unbewussten Datenmissbrauchs auf einem mobilen Gerät, das einen Internetanschluss besitzt, wesentlich größer, als bei mobilen Geräten ohne Internetanschluss. Daher unterliegen Smartphones, die in der Regel mit dem Internet verbunden sind, strengeren Sicherheitsauflagen als mobile Endgeräte, wie z.B. Laptops, die keinen Internetanschluss besitzen.

Eine gerätespezifische Zugangskontrolle ist daher sehr vorteilhaft, da dann gerätespezifisch entschieden werden kann, ob das jeweilige Gerät Zugang zum Server erhält. Die gerätespezifische Zugangskontrolle unterscheidet sich grundsätzlich von der benutzerspezifischen Zugangskontrolle in der Verwaltung, da jedes Gerät einzeln zu Verwalten ist und auch in der Festlegung der Zugangsregeln, da hierbei die individuelle Konfiguration des jeweiligen Gerätes mit berücksichtigt werden kann.

Mit dem Microsoft^{®} Gateway Microsoft^{®} CAS ist eine solche gerätespezifische Verwaltung von mobilen Endgeräten möglich.

IBM vertreibt unter der Bezeichnung IBM^{®} Lotus Notes Traveler ein Gateway für die bidirektionale drahtlose Synchronisation zwischen dem E-Mail-Server IBM Lotus Domino und bestimmten mobilen Endgeräten. Mit IBM Lotus Notes Traveler werden E-Mails, Kalenderdaten, Aufgaben, Adressbuch und Journaldaten in Echtzeit synchronisiert. Ein Lotus Notes- oder ein Lotus iNotes Benutzer ist automatisch als Lotus Notes Traveler-Benutzer aktiviert. Benutzer von den jeweiligen mobilen Endgeräten müssen nur die entsprechende Client-Software installieren und das Gerät auf einen IBM Lotus Domino Server mit einem Lotus Notes Traveler Gateway ausrichten. Die Verbindung zwischen dem mobilen Endgerät und dem Server wird automatisch hergestellt und die Synchronisation wird automatisch gestartet.

Hierbei erfolgt die Autorisierung bzw. die Verwaltung der Datenverbindungen ausschließlich anhand der Benutzer-Zugangsdaten. Dass eine gerätespezifische Zugangskontrolle vorteilhaft wäre, wurde bereits erkannt und entsprechende Produkte sind am Markt erhältlich. Von der Firma Midpoints GmbH werden z.B. für IBM Lotus Notes Traveler spezielle traveler.rules angeboten, mit welchen die Benutzung von Traveler auf privaten Endgeräten verhindert werden kann und anhand des Gerätetypes, der Seriennummer und/oder der Betriebssystemversion kann der Zugriff auf den Server gesteuert werden traveler.rules ergänzt das Gateway IBM Lotus Notes Traveler durch weitere Regeln und Funktionen, die den Zugriff von einem mobilen Endgerät auch mittels gerätespezifischer Codes steuern können. Hierbei wird das Gateway durch weitere Funktionalität erweitert.

Die Anmelderin hat in einem nicht veröffentlichten Projekt ähnliche Funktionen zum Gateway IBM Lotus Notes Traveler hinzugefügt. Hierbei wurden Regeln vorgesehen, mit welchen in IBM Lotus Notes Traveler auf eine spezielle Datenbank zugegriffen wurde, in der die unterschiedlichen, möglichen Verbindungsanfragen von Endgeräten hinterlegt sind, so dass in Abhängigkeit eines Vergleichs mit den Inhalten der Datenbank der Zugriff auf den E-Mail Server IBM Lotus Domino erlaubt oder abgelehnt werden konnte. Dieses System hat für eine kleine Anzahl von Endgeräten gut funktioniert. Jedoch war es für eine große Anzahl von Endgeräten, insbesondere mehr als einige Tausend Endgeräte, nicht brauchbar, da der Umfang der Datenbank zu groß wurde, und die Anzahl der Zugriffe auf die Datenbank so viel wurden, dass keine angemessenen Antwortzeiten bei einer Anfrage eines Endgerätes an das Gateway des E-Mail-Servers erzielt werden konnten. Das System konnte wegen Überlastung nicht betrieben werden.

Für große Unternehmen, wie z.B. Banken oder Versicherungen, die mehrere Tausend Mitarbeiter haben, die mit ihren mobilen Endgeräten von einem zentralen E-Mail-Server E-Mails abrufen und dorthin übermitteln wollen, besteht ein erheblicher Bedarf den Zugriff dieser Endgeräte über gerätespezifische Informationen zu steuern.

Der Erfindung liegt daher die Aufgabe zugrunde, ein System und ein Verfahren zum Freigeben einer Datenverbindung zwischen einem Endgerät und einem Gateway eines E-Mail-Servers zu schaffen, mit dem auf einfache Art und Weise der Zugriff der Endgeräte mittels gerätspezifischer Information steuerbar ist und kurze Antwortzeiten auch bei einer großen Anzahl von Endgeräten möglich sind.

Die Erfindung wird durch ein System mit den Merkmalen des Anspruchs 1 und durch ein Verfahren mit dem Merkmal des Anspruchs 4 gelöst. Vorteilhafte Ausgestaltungen der Erfindung sind in den jeweiligen Unteransprüchen angegeben.

Das erfindungsgemäße System und das erfindungsgemäße Verfahren zum Freigeben einer Datenverbindung zwischen einem Endgerät und einem Gateway eines E-Mail-Servers weisen einen Filter zum Filtern von Verbindungsanfragen von Endgeräten auf. Der Filter ist unabhängig vom Gateway ausgebildet und über eine Programmschnittstelle (API) an einen Standard-Webserver gekoppelt. Der Filter ist derart ausgebildet, dass er nach einer Autorisierungs-Prüfung der Verbindungsanfrage diese ablehnen oder freigeben kann, wobei eine freigegebene Verbindungsanfrage an das Gateway zur Durchführung der weiteren Kommunikation mit dem jeweiligen Endgerät weitergegeben wird. Die Autorisierungs-Prüfung der Verbindungsanfrage umfasst zumindest die Prüfung eines für das jeweilige Endgerät spezifischen Codes.

Mit der Erfindung wird entgegen dem Stand der Technik der Filter zum Filtern von Verbindungsanfragen von Endgeräten nicht am Gateway vorgesehen, sondern unabhängig vom Gateway ausgebildet und an einen Standard-Webserver gekoppelt. Ein Standard-Webserver im Sinne der vorliegenden Erfindung ist ein an einem Computer ausführbares Computerprogramm, das Dateien an Clients, wie z.B. Webbrowser, überträgt, wobei der Standard-Webserver keine Filter zum gerätespezifischen Filtern von Verbindungsanfragen aufweist. Die Übertragung der Dateien erfolgt üblicherweise nach dem http- bzw. dem https-Protokoll.

Es hat sich gezeigt, dass sich der erfindungsgemäße Filter auch an einem Standard-Webserver einfach realisieren lässt, auch wenn der Standard-Webserver hierfür nicht speziell ausgebildet ist. Der Standard-Webserver muss lediglich eine Programm-Schnittstelle (API) aufweisen, mit der ein Programm an den Webserver gekoppelt werden kann. Die Programmschnittstelle eines Standard-Webservers wurde ursprünglich dazu vorgesehen, Internetseiten sehr schnell ausführbar zu machen, da über die Programmschnittstelle an den Standard-Webserver gekoppelte Internetseiten unmittelbar vom Kern des Standard-Webservers ausgeführt werden und die meisten oder alle Daten im Cache-Speicher verarbeitet werden. Dieser Umstand ist für den erfindungsgemäßen Filter von erheblichem Vorteil, da selbst bei der Anbindung mehrerer Tausend Endgeräte an ein einziges Gateway die Freigabe der jeweiligen Datenverbindungen mit dem Filter sehr schnell ausgeführt werden kann, so dass die Kopplung des Filters über die Programmschnittstelle (API) an den Standard-Webserver die Eingangs erläuterten Kapazitätsprobleme löst. Hierdurch ist es möglich von einer an sich fast beliebigen Anzahl von Endgeräten bei einer Verbindungsanfrage zumindest einen für das jeweilige Endgerät spezifischen Code zu prüfen und in Abhängigkeit hiervon die Datenverbindung zwischen dem Endgerät und dem Gateway des E-Mail-Servers freizugeben.

Vorzugsweise entsprechen die Verbindungsanfragen einem Synchronisations-Protokoll, zum Synchronisieren von Daten von einem mobilen Endgerät mit einem E-Mail-Server, wie z.B. dem ActiveSync^{®}-Protokoll oder dem Open Sync-Protokoll. Die Verwendung von standardisierten Protokollen erlaubt zum einen den Anschluss von Endgeräten, die nach diesen Protokollen arbeiten und bewirkt zum anderen, dass die einzelnen bei der Filterung auszuführenden Schritte nach standardisierten Regeln erfolgen, die lediglich wenige Schritte umfassen und einfach in den entsprechenden Programmcode umzusetzen sind.

Vorzugsweise basieren die Verbindungsanfragen auf dem http-Protokoll oder dem https-Protokoll.

Vorzugsweise ist beim erfindungsgemäßen System bzw. beim erfindungsgemäßen Verfahren ein DMS-Server vorgesehen, der mehrere Kommunikationsmodule aufweist, welche jeweils mit zumindest einem Endgerät kommunizieren, um einen Gerätestatus des jeweiligen Endgerätes an den DMS-Server zu übermitteln. Anhand des Gerätestatus wird ein Verbindungsstatus mit zumindest den Werten "verbinden" und "trennen" bestimmt und in eine konsolidierte Liste eingetragen. Die konsolidierte Liste wird an einen an einem E-Mail-Server vorgesehenen Filter übermittelt wird, wobei bei einer Verbindungsanfrage eines Endgerätes am E-Mail-Server der dem jeweiligen Endgerät zugeordnete Verbindungsstatus bei der Autorisierung des jeweiligen Endgerätes mittels des Filters berücksichtigt wird.

Neben der gerätespezifischen Überprüfung einer Verbindungsanfrage anhand der in der konsolidierten Liste enthaltenen Daten kann auch eine Verbindungsanfrage am E-Mail-Server mit einer benutzerspezifischen Autorisierung dahingehend geprüft werden, ob ein Benutzer autorisiert ist, auf die Daten des E-Mail-Servers zuzugreifen, und nur wenn sowohl das vom Benutzer verwendete Endgerät als auch der Benutzer selbst autorisiert sind, wird dem Benutzer der Zugriff auf den E-Mail-Server erlaubt. Diese benutzerspezifische Autorisierung wird vorzugsweise anhand von mit der Verbindungsanfrage übermittelten Daten, insbesondere zumindest einer mit der Verbindungsanfrage übermittelten benutzerspezifischen Identifikation durchgeführt, so dass sicher gestellt ist, dass die Verbindungsanfrage von einem korrekten Benutzer stammt. Diese mit der Verbindungsanfrage übermittelte benutzerspezifische Identifikation kann mit entsprechenden Daten, die mit der konsolidierten Liste übermittelt werden, verglichen werden, um eine zusätzliche Sicherheitsstufe zu erhalten.

Die Kommunikationsmodule können unterschiedlich konfigurierbar sein und jeweils mit mehreren der Endgeräte eines Mandanten kommunizieren. Hierdurch können unterschiedliche Zusammenstellungen des Gerätestatus von den Endgeräten unterschiedlicher Mandanten übertragen werden und/oder kann die Kommunikation auf unterschiedliche Weise, insbesondere nach unterschiedlichen Sicherheitsregeln, zwischen den Endgeräten unterschiedlicher Mandanten ausgeführt werden. Die übertragenen Gerätestatusse der Endgeräte eines Mandanten werden jeweils in eine Mandantendatei eingetragen werden, für mehrere Mandanten jeweils eine Mandantendatei vorgehalten wird. Ein Compliance-Modul bestimmt anhand des Gerätestatus des jeweiligen Endgerätes den Verbindungsstatus oder überprüft diesen und trägt ihn in die entsprechende Mandantendatei ein. Ein Grabber-Modul liest den Verbindungsstatus aus den mehreren Mandantendateien aus und trägt ihn in die konsolidierte Liste ein.

Durch die mandantenspezifische Kommunikation zwischen dem DMS-Server und den Endgeräten kann den Anforderungen der von den einzelnen Mandanten verwendeten Hard- und Softwaresystemen bzw. Sicherheitsrichtlinien entsprochen werden. Durch die Zusammenfassung des Verbindungsstatus von einer Vielzahl von Endgeräten, die sogar von unterschiedlichen Mandanten stammen können, kann der an den E-Mail-Server gekoppelte Filter mit geringem Kommunikationsaufwand bezgl. Des Verbindungsstatus der Vielzahl von Endgeräten aktualisiert gehalten werden. Dieser Aspekt der Erfindung stellt einen selbständigen Erfindungsgedanken dar, der auch in Verbindung mit einem nicht unabhängig vom Gateway bzw. in einen E-Mail-Server integrierten gerätespezifischen Filter eingesetzt werden kann.

Dadurch dass der Verbindungsstatus einer Vielzahl von Endgeräten mit einer einzigen Liste übermittelt wird, umfasst der Datenverkehr zwischen dem DMS-Server und dem Filter wenige Übertragungsvorgänge. Dies vereinfacht erheblich die Kommunikation zwischen dem DMS-Server und dem Filter im Vergleich zu einem Verfahren, bei dem jedes Kommunikationsmodul separat mit dem Filter den Verbindungsstatus austauschen würde.

Vorzugsweise wird die gesamte konsolidierte Liste in relativ großen Abständen von z.B. zwei bis 24 Stunden vom DMS-Server zum Filter übertragen. Delta-Listen, die lediglich die Änderungen seit der letzten Übertragung der Liste enthalten, werden in kürzeren Abständen von z.B. fünf Minuten bis zwei Stunden regelmäßig vom DMS-Server an den Filter übertragen. Die Übertragung der Listen erfolgt vorzugsweise, indem der Filter die entsprechenden Listen vom DMS-Server abruft.

Die einzelnen Kommunikationsmodule sind beispielsweise als Dienste, insbesondere Web-Services, auf dem DMS-Server realisiert. Sie erhalten vorzugsweise in regelmäßigen Abständen von den jeweiligen Endgeräten einen Gerätestatus. Dieser Gerätestatus enthält eine gerätespezifische Identifikation, und kann weitere Informationen zur Konfiguration, zum Status und zur Benutzung des jeweiligen Endgerätes enthalten. Insbesondere umfassen die weiteren Informationen eine Liste aller installierten Anwendungen und statistische Daten zur Benutzung der jeweiligen Anwendungen.

Der DMS-Server kann mit einem Compliance-Modul ausgebildet sein, das dem Gerätestatus der einzelnen Endgeräte analysiert und nach vorbestimmten Regeln eine Verbindung mit dem E-Mail-Server blockieren kann. Mit dem Compliance-Modul werden somit fortlaufend die Aktivitäten am Endgerät überwacht, und falls z.B. eine nicht zugelassene Anwendung auf einem Endgerät installiert wird, wird die Verbindung zum E-Mail-Server blockiert. Deshalb wird die Autorisierung durch das Compliance-Modul auch als dynamische Autorisierung bezeichnet. Diese dynamische Autorisierung kann unterschiedlichsten Regeln unterliegen. Sollte beispielsweise das Endgerät nicht innerhalb eines vorbestimmten Zeitintervals des Endgerätestatus an das Kommunikationsmodul übermitteln, dann wird die Verbindung geblockt. Beim Blockieren einer Verbindung wird vom Compliance-Modul in die konsolidierte Liste für das jeweilige Endgerät der Verbindungsstatus "trennen" eingetragen. Es ist auch möglich diesen Verbindungsstatus durch ausführliche Statusinformationen zu ergänzen, die zusätzlich in die Liste eingetragen werden können oder mit einer separaten Nachricht an den E-Mail-Server übermittelt werden.

Der Filter zum Filtern von Verbindungsanfragen weist vorzugsweise ein DPM-Modul (Device Permission Manager) auf, in dem der Verbindungsstatus der einzelnen Endgeräte vorgehalten wird. Mit Hilfe des DMS-Servers und der regelmäßigen Übermittlung der konsolidierten Liste bzw. der konsolidierten Delta-Liste wird der Verbindungsstatus am DPM-Modul regelmäßig aktualisiert. Bei einer am Web-Server eingehende Verbindungsanfrage kann somit der Filter auf einen jeweils aktuellen Verbindungsstatus zugreifen, um die Verbindungsanfrage zu prüfen.

Am DPM-Modul können Compliance-Regeln implementiert sein, mit welchen definiert wird, welche Endgeräte grundsätzlich verbunden werden dürfen und/oder welche Endgeräte grundsätzlich nicht verbunden werden dürfen. Ein Administrator des Systems kann somit festlegen, welche Endgeräte freigegeben werden können oder grundsätzlich zu blockieren sind. Eine solche statische Verbindungsstatus-Liste, in der Endgeräte aufgeführt sind, die nicht verbunden werden dürfen, wird als Blacklist bezeichnet. Eine statische Verbindungsstatus-Liste, in der Endgeräte aufgeführt sind, die verbunden werden dürfen, wird als Whitelist bezeichnet.

Die Prüfung der Verbindungsanfrage durch den Filter erfolgt vorzugsweise in zwei Stufen, einer Eingangsprüfung und einer nachfolgenden Freigabeprüfung. Mit der Eingangsprüfung wird zunächst geprüft, ob die am Web-Server eingehende Anfrage eine Verbindungsanfrage zum Freigeben einer Datenverbindung zwischen einem Endgerät und einem Gateway des E-Mail-Servers ist. Diese Prüfung erfolgt beispielsweise anhand einer bei der Anfrage übermittelten URL und/oder eines in der URL genannten Pfades und/oder eines in der URL genannten User-Agents. Der User-Agent beschreibt das jeweilige Endgerät, insbesondere den Typ des Endgerätes und das auf dem Endgerät verwendete Betriebssystem. Die URL kann einen expliziten Aufruf des Filters oder des Gateways enthalten und sich so als Verbindungsanfrage auszeichnen.

Wird diese Verbindungsanfrage als solche vom Filter erkannt, dann kann sie gegenüber dem Endgerät bestätigt werden, wodurch das Endgerät in einem weiteren Datenaustausch mit dem Web-Server weitere Daten übermittelt, die zumindest einen endgerätspezifischen Code enthalten. Diese weiteren Daten werden in der Freigabeprüfung vom Filter, insbesondere mit Hilfe des DPM-Moduls, geprüft und wenn sie den Compliance-Regeln genügen, freigegeben. Eine freigegebene Verbindungsanfrage wird dann vom Filter an das Gateway des E-Mail-Servers weitergeleitet, so dass das Gateway direkt mit dem jeweiligen Endgerät kommuniziert, um E-Mail-Daten zwischen dem Endgerät und dem E-Mail-Server zu synchronisieren.

Die erfindungsgemäßen Verfahren können als Software realisiert werden. Die Software kann auf einem oder mehreren Computer gespeichert und ausgeführt werden. Die Software kann auf einen Datenträger gespeichert sein.

Die Erfindung wird nachfolgend anhand der Zeichnung beispielhaft näher erläutert. Die Zeichnungen zeigen in:
- Fig. 1: ein erfindungsgemäßes System zum Freigeben einer Datenverbindung zwischen einem Endgerät und einem Gateway eines E-Mail-Servers schematisch vereinfacht in einem Blockschaltbild,
- Fig. 2: das Verfahren zum Prüfen einer Verbindungsanfrage in dem System nach Fig. 1 in einem Flussdiagramm,
- Fig. 3: eine konsolidierte Liste in Form einer xml-Datei, und
- Fig. 4: eine konsolidiert Liste in Form einer xml-Datei.

Ein Ausführungsbeispiel eines erfindungsgemäßen Systems zum Freigeben einer Datenverbindung zwischen einem Endgerät 1 und einem E-Mail-Server 2 auf einem Server-Computer 3.

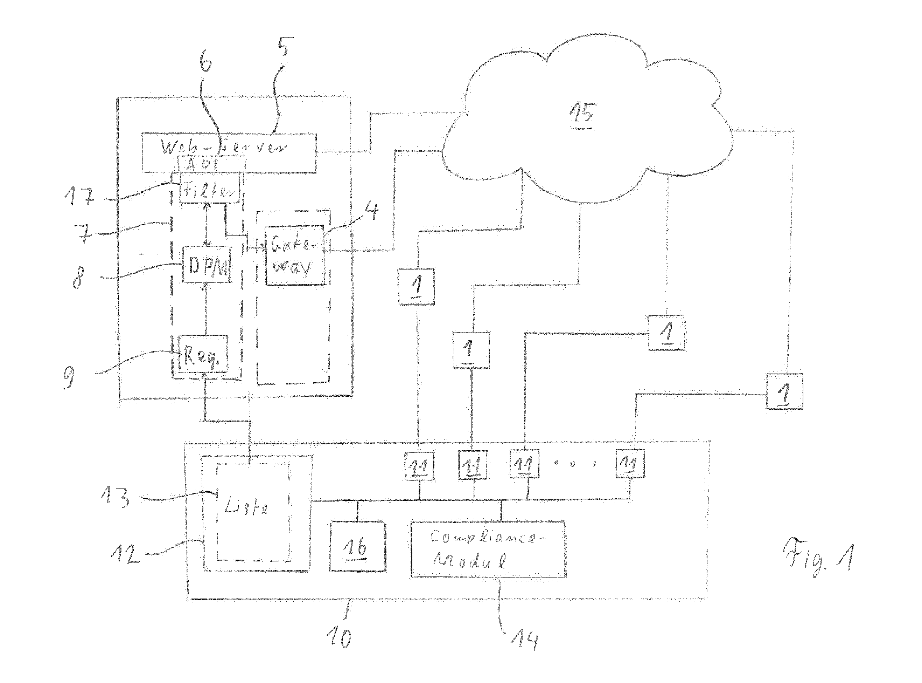

Der E-Mail-Server 2 umfasst alle Computerprogrammelemente, die zum Verwalten, Empfangen und Versenden von E-Mails notwendig sind. In Fig. 1 ist lediglich ein Gateway 4 des E-Mail-Servers 2 dargestellt. Darüber hinaus weist der E-Mail-Server 2 diverse weitere Programmelemente auf, wie zum Beispiel zumindest eine Datenbank zum Abspeichern der E-Mails und diverse Dienstprogramme, wie zum Beispiel einen Editor, zum Bearbeiten der E-Mails.

Am Server-Computer 3 ist ein Web-Server 5 vorgesehen, der zum Übertragen von Dateien bzw. Dokumenten an Clients dient. Der Web-Server 5 weist eine Programm-Schnittstelle 6 (API; Application Programming Interface) auf.

An die Programm-Schnittstelle 6 ist ein Filter 7 zum Filtern von Verbindungsanfragen von Endgeräten gekoppelt. Der Filter weist ein Filter-Modul 17, ein DPM-Modul 8 (DPM; Device Permission Manager) und einen Requester 9 auf. Der Filter 7 ist mit dem Filter-Modul 17 an die Programm-Schnittstelle 6 gekoppelt. Das Filter-Modul 17 ist mit dem DPM-Modul 8 verbunden, in welchem für ein jedes Endgerät 1, das grundsätzlich eine Verbindungsanfrage für eine Verbindung mit dem E-Mail-Server 2 absetzen kann, ein Verbindungsstatus vorgehalten wird. Die Verbindungsstatusse der Endgeräte 1 sind in einer oder mehreren Listen gespeichert. Diese Verbindungsstatus-Listen umfassen zumindest eine statische Verbindungsstatusliste, in welche der Verbindungsstatus für bestimmte Endgeräte gespeichert ist und die im normalen Betrieb nicht verändert wird. Ein Operator kann manuell den Verbindungsstatus in der statischen Verbindungsstatusliste ändern oder es kann mit bestimmten Funktionen der Verbindungsstatus vorübergehend automatisch verändert werden, wie z.B., dass eine externe Liste importiert wird. Weiterhin gibt es vorzugsweise eine dynamische Verbindungsstatusliste, die während des Betriebes regelmäßig verändert werden kann, wie es unten näher erläutert ist.

Das DPM-Modul 8 stellt die Daten der Verbindungsstatus-Listen dem Filter-Modul 17 zum Prüfen einer Verbindungsanfrage zur Verfügung. Es gibt Regeln, die die Priorität der Verbindungsstatus-Listen festlegen, falls mehrere Verbindungsstatus-Listen vorhanden sind. Meistens wird die Regel angewandt, dass die statischen Verbindungsstatus-Listen Vorrang vor den dynamischen Verbindungsstatus-Listen haben.

Weiterhin gibt es Regeln, wie Endgeräte zu beurteilen sind, die in keiner der Verbindungsstatus-Listen aufgeführt sind. Nach diesen Regeln kann ein Endgerät entweder die Verbindung zum E-Mail-Server erlaubt oder untersagt werden.

Nach einer bevorzugten Ausführungsform der vorliegenden Erfindung kann bei Einführung des gesamten Systems während einer Anmeldephase die Regel angewandt werden, dass ein Endgerät, das in keiner der Verbindungsstatus-Listen enthalten ist, die Verbindung zum E-Mail-Server erlaubt wird, und nach der Anmeldephase auf die Regel umgeschaltet wird, dass einem Endgerät, das in keiner der Verbindungsstatus-Listen enthalten ist, die Verbindung zum E-Mail-Server nicht erlaubt wird.

Während dieser Anmeldephase können an sich Endgeräte eine Verbindung zum E-Mail-Server herstellen und registriert werden. Nach der Anmeldephase wird nicht registrierten Endgeräten keine Verbindung zum E-Mail-Server frei gegeben.

Das DPM-Modul 8 ist mit einem Requester 9 verbunden, der Daten von einem DMS-Server 10 abrufen kann.

Der DMS-Server 10 (Device-Management-Server) ist ein Computerprogrammpaket, das die Verwaltung der Endgeräte unterstützt. Der DMS-Server 10 kann auf dem Server-Computer 3, auf dem der E-Mail-Server 2 installiert ist, installiert und ausgeführt werden. Der DMS-Server 10 kann jedoch auch auf einem separaten Server-Computer installiert und ausgeführt werden. Der DMS-Server 10 weist mehrere Kommunikationsmodule 11 auf, welche jeweils mit zumindest einem der Endgeräte 1 kommunizieren. Die Kommunikationsmodule sind beispielsweise als Dienste, insbesondere Web-Services, auf dem DMS-Server 10 ausgebildet. Vorzugsweise kommuniziert jeweils ein Kommunikationsmodul 11 mit allen Endgeräten eines einzelnen Mandanten. Hierdurch kann am DMS-Server eine mandantenspezifische Kommunikationsstruktur realisiert werden, so dass die Kommunikation für die jeweiligen Mandanten nach unterschiedlichen Vorgaben (Policies) erfolgt. Von den Endgeräten unterschiedlicher Mandanten können unterschiedliche Arten von Informationen abgefragt werden und die Kommunikation zu unterschiedlichen Mandanten kann nach unterschiedlichen Sicherheitsregeln erfolgen. Diese mandantenspezifische Kommunikation ist sehr vorteilhaft und oftmals notwendig, da die Mandanten unterschiedliche Sicherheitssysteme für die Kommunikation verwenden oder unterschiedliche Zertifikate besitzen oder lediglich unterschiedliche Anforderung und Wünsche haben können, die auf die auszulesenden und zu übertragenden Informationen Einfluss haben.

Die Kommunikationsmodule 11 stehen mit einem Web-Service 12 in Verbindung, auf dem eine konsolidierte Liste 13 gespeichert ist. Der Web-Service 12 stellt die konsolidierte Liste 13 zum Abruf durch den Requester 9 bereit. In einer bevorzugten Ausführungsform stellt der Web-Service 12 den Abruf der gesamten konsolidierten Liste 13 und einer konsolidierten Delta-Liste zur Verfügung, wobei die Delta-Liste lediglich die Datensätze der Endgeräte beinhaltet, in welchen Änderungen seit dem letzten Aufruf der konsolidierten Liste bzw. der konsolidierten Delta-Liste erfolgt sind.

Die Kommunikationsmodule 11 empfangen in regelmäßigen Abständen einen Gerätestatus von den jeweiligen Endgeräten 1 und tragen diesen in eine Mandantendatei ein. Der Gerätestatus weist zumindest eine gerätespezifische Identifikation und Kommunikationsdaten und/oder Konfigurationsdaten auf. Kommunikationsdaten beschreiben z.B. die Kommunikationsverbindungen (Austausch von E-Mails, telefonisch Verbindungen oder Internetverbindungen) des jeweiligen Endgerätes in einem bestimmten Zeitraum. Konfigurationsdaten beschreiben Teile der am Endgerät konfigurierten Soft- und Hardware. Diese Daten können bereits am Endgerät zu Statistiken zusammengefasst werden, wobei dann die Statistik dem Gerätestatus hinzugefügt wird. Die Zusammensetzung des Gerätestatus unterscheidet sich in der Regel für die unterschiedlichen Mandanten. Bei bestimmten Mandanten sind dehr ausführliche Kommunikationsdaten enthalten, vor allem wenn über die entsprechenden Endgeräte vertrauliche Informationen zu übertragen sind, bei anderen Mandanten sind die Konfigurationsdaten umfangreicher.

Für ein jedes Kommunikationsmodul ist eine Mandantendatei vorgesehen, die am Kommunikationsmodul oder an einer anderen Stelle des DMS-Servers 10 vorgehalten werden kann. Die Mandantendateien umfassen somit die Gerätestatusse aller Endgeräte des jeweiligen Mandanten.

An dem DMS-Server 10 ist ein Compliance-Modul 14 vorgesehen, das nach vorbestimmten Compliance-Regeln (Policies) anhand des von den Kommunikationsmodulen 11 empfangenen und in den Mandantendateien eingetragenen Gerätestatus überprüft, ob die jeweiligen Endgeräte 1 grundsätzlich mit dem E-Mail-Server 2 verbunden werden dürfen. Das Compliance-Modul 14 leitet einen Verbindungsstatus von dem jeweiligen Gerätestatus ab und trägt ihn in die entsprechende Mandantendatei ein oder ändert ihn bei Bedarf ab.

Der Verbindungsstatus umfasst zumindest die beiden Werte "verbinden" und "trennen". Selbstverständlich kann der Verbindungsstatus "verbinden" und "trennen" mit einem beliebigen, anderen vorbestimmten String und/oder einem Flag in den Mandantendateien codiert sein.

Zur Überprüfung des Verbindungsstatus können unterschiedliche Regeln (Compliance-Regel bzw. Policies) vorgesehen sein, wie zum Beispiel, dass der Gerätestatus vom Endgerät 1 jeweils innerhalb eines vorbestimmten Zeitintervalls an das jeweilige Kommunikationsmodul 11 übertragen werden muss, ansonsten wird der Kommunikationsstatus "trennen" gesetzt oder wenn anhand des Gerätestatus feststellbar ist, dass unerlaubte Anwendungen an dem jeweiligen Endgerät 1 installiert sind, wird der Verbindungsstatus auch auf "trennen" gesetzt. Die Überwachung des Gerätestatus der Endgeräte 1 erfolgt kontinuierlich während des Betriebs mittels des Compliance-Moduls 14 und berücksichtigt Änderungen am Gerätezustand während des Betriebes der Endgeräte 1. Deshalb wird die Bestimmung des Verbindungsstatus durch das Compliance-Modul 14 anhand des Gerätestatus auch als dynamische Autorisierung bezeichnet. Die Überwachung des Verbindungsstatus kann für die einzelnen Mandanten nach unterschiedlichen Regeln, also mandantenspezifisch, erfolgen.

Ein Grabber-Modul 16 ist vorgesehen, das die Mandantendateien aller Kommunikationsmodule lesen kann und bestimmte Informationen zu den einzelnen Endgeräten 1, insbesondere den Verbindungsstatus und eine gerätespezifische Identifikation und optional einer benutzerspezifische Identifikation ausliest und in die konsolidierte Liste 13 einträgt.

An den Endgeräten 1 sind Client-Programme installiert und werden dort ausgeführt, um einerseits den Kommunikationsmodulen 11 in regelmäßigem Abstand den Gerätestatus zu übermitteln und andererseits um E-Mail-Daten über das Internet 15 zwischen dem E-Mail-Server und den Endgeräten zu synchronisieren. Die Endgeräte 1 sind vorzugsweise mobile Endgeräte. Bei bestimmten Typen von mobilen Endgeräten ist ein solches Client-Programm bereits in der Basiskonfiguration enthalten. Diese Client-Programme können nach vorbestimmten Protokollen kommunizieren, insbesondere dem ActiveSynC^{®}-Protokoll oder dem OpenSynC-Protokoll.

Nachfolgend wird das Verfahren zum Freigeben einer Datenverbindung zwischen einem Endgerät 1 und dem Gateway 4 des E-Mail-Servers 2 erläutert:

Wie es oben bereits beschrieben ist, wird von dem Kommunikationsmodul 11 der Gerätestatus der einzelnen Endgeräte 1 erfasst. Der Gerätestatus kann neben der gerätespezifischen Identifikation auch Konfigurationsdaten und/oder Kommunikationsdaten umfassen. Die Konfigurationsdaten beschreiben die auf dem jeweiligen Endgerät 1 installierten Programme und das installierte Betriebssystem. Die Konfigurationsdaten können auch Einstellungsparameter des Betriebssystems oder der Programme umfassen. Die Kommunikationsdaten beschreiben die Kommunikation des Endgerätes mit anderen Geräten. Die Kommunikationsdaten können Angaben über die Kommunikationspartner, Statistiken und dergleichen umfassen.

Der jeweils erfasste Gerätestatus wird in die jeweiligen Mandantendateien eingetragen. Das Compliance-Modul 14 bestimmt den Verbindungsstatus und wertet hierzu den Gerätestatus aus. Dies kann in vorbestimmten Zeitabständen erfolgen oder ereignisgesteuert ausgeführt werden, jedes Mal wenn der Gerätestatus in der Mandantendatei des jeweiligen Endgerätes geändert wird.

Der Verbindungsstatus wird vom Grabber-Modul 16 aus den Mandantendateien ausgelesen und in die konsolidierte Liste 13 in einen Datensatz eingetragen, der dem jeweiligen Endgerät zugeordnet ist. Neben dem Verbindungsstatus können diese Datensätze noch ausgewählte Informationen außer dem Verbindungsstatus enthalten. Insbesondere enthalten diese Datensätze einen gerätespezifischen Code, so dass der Datensatz eindeutig einem bestimmten Endgerät 1 zugeordnet werden kann.

Dieser DMS-Server 10 ist mehr-mandantenfähig ausgebildet. Ein E-Mail-Server 2 weist eine Datenbank auf, wobei in der Datenbank die E-Mail-Daten gespeichert sind. Es gibt E-Mail-Server, die gleichzeitig mehrere derartige Datenbanken parallel betreiben können, wobei die einzelnen Datenbanken voneinander getrennt sind. Ein Mandant umfasst alle Anwender bzw. Nutzer, die auf E-Mail-Informationen in einer einzelnen, bestimmten Datenbank zugreifen können. Hierfür müssen sie sich am E-Mail-Server als Benutzer einer der bestimmten Datenbanken korrekt autorisieren. Für den Zugriff auf E-Mail-Daten eines E-Mail-Servers gibt es im Stand der Technik etablierte Regeln, mit welchen ein Benutzer, der zu einem bestimmten Mandanten gehört, nicht die E-Mail-Daten eines anderen Mandanten lesen kann. Es gibt z.B. ein System, das für jeden Mandanten ein separates Zertifikat verlangt. E-Mail-Server weisen somit ein Autorisierungsmodul zum Autorisieren des Zugriffs von Benutzern auf eine bestimmte Datenbank auf.

Im Stand der Technik war es oftmals notwendig, dass bei einer gerätespezifischen Identifikation den einzelnen Mandanten separate virtuelle E-Mail-Server mit einer separaten URL (Alias) zugeordnet werden müssen, wobei die einzelnen virtuellen E-Mail-Server auf einen zentralen E-Mail-Server zugreifen. An dem virtuellen E-Mail-Server erfolgt die Authentifizierung der einzelnen Benutzer und der Geräte der Mandanten, so dass sichergestellt wird, dass kein unbefugter Benutzer mit einem nicht erlaubten Gerät direkt auf den zentralen E-Mail-Server zugreifen kann.

Neben der gerätespezifischen Überprüfung einer Verbindungsanfrage anhand der in der konsolidierten Liste enthaltenen Daten kann auch eine Verbindungsanfrage am E-Mail-Server mit
und nur wenn sowohl das vom Benutzer verwendete Endgerät als auch der Benutzer selbst autorisiert sind, wird dem Benutzer der Zugriff auf den E-Mail-Server erlaubt.

Bei der benutzerspezifischen Autorisierung wird eine eingehende Verbindungsanfrage dahingehend geprüft, ob der Benutzer, von dem die Verbindungsanfrage stammt autorisiert ist und auf die Daten des E-Mail-Servers zugreifen darf. Diese benutzerspezifische Autorisierung wird vorzugsweise anhand von mit der Verbindungsanfrage übermittelten Daten, insbesondere zumindest einer mit der Verbindungsanfrage übermittelten benutzerspezifischen Identifikation durchgeführt. Optional kann diese mit der Verbindungsanfrage übermittelte benutzerspezifische Identifikation mit entsprechenden Daten, die mit der konsolidierten Liste übermittelt werden, verglichen werden, um eine zusätzliche Sicherheitsstufe zu erhalten. Diese benutzerspezifische Autorisierung wird unabhängig von der gerätespezifischen Filterung ausgeführt.

Das erfindungsgemäße System umfassend den Filter 7 und den DMS-Server 10 ersetzt nicht die benutzerspezifische Autorisierung am E-Mail-Server 2, sondern stellt eine zusätzliche gerätespezifische Autorisierung zur Verfügung. Dies bedeutet, dass ein Endgerät 1 vom Filter 7 freigegeben bzw. erlaubt werden muss, damit ein Benutzer, der das jeweilige Endgerät 1 benutzt, sich am E-Mail-Server 2 zum Synchronisieren der E-Mail-Daten als Benutzer authentifizieren kann. Da das System aus Filter 7 und DMS-Server 10 nicht die Autorisierung am E-Mail-Server ersetzt, sondern ergänzt, kann der Filter 7 bezüglich des Benutzers keine oder optional nur eine eingeschränkte Autorisierung bzgl. des Benutzers durchführen. Aufgrund der Entkopplung von der benutzerspezifischen Autorisierung am E-Mail-Server 2 können die gerätespezifischen Identifikationen unabhängig von den Verbindungsanfragen am DMS-Server gesammelt und überprüft werden. Diemandantenspezifische Kommunikationsstruktur wird nicht in die konsolidierte Liste 13 übertragen. Die aufgrund unterschiedlicher Hardware- und Softwaresysteme der unterschiedlichen Mandanten und/oder unterschiedlicher Sicherheitsrichtlinien der unterschiedlichen Mandanten oftmals notwendige mandantenspezifische Kommunikationsstruktur wird beim Übertragen der Daten zum Verbindungsstatus in die konsolidierte Liste aufgehoben. Hierdurch ist es möglich, dass die am DMS-Server 10 vorgesehenen Kommunikationsmodule 11 gleichzeitig mit Endgeräten 1 unterschiedlicher Mandanten kommunizieren können und andererseits die Verbindungsdaten von einer Vielzahl von Endgeräten - auch von unterschiedlichen Mandanten - mit geringem Datenvolumen und wenig Kommunikationsaufwand an den Filter übermittelt werden können. Dies ist möglich, da die erfindungsgemäße Filterung der Autorisierung am E-Mail-Server 2 vorgeschaltet ist und von dieser unabhängig ist. Aufgrund der mehr-Mandanten-Fähigkeit des DMS-Servers 10 können die gerätespezifischen Zugangsdaten und die zur gerätespezifischen Prüfung zu einem E-Mail-Server über einen einzelnen zentralen DMS-Server erfasst werden.

Da nur wenige, bestimmte gerätespezifische Informationen und der Verbindungsstatus in die konsolidierte Liste 13 einzutragen sind, können mit einem DMS-Server mehrere 100 bis einige 1000 Mandanten mit jeweils einigen bis einigen 1000 Endgeräten verwaltet werden. Der DMS-Server 10 ist vorzugsweise auf einen vom E-Mail-Server 2 getrennten Servercomputer implementiert, so dass die Kommunikation zu den einzelnen Endgeräten nicht die Leistung des E-Mail-Servers 2 beeinträchtigt. Es ist sogar möglich, dass auf einem DMS-Server zwei oder mehrere konsolidierte Listen 13 vorgehalten werden, mit welchen jeweils der gerätespezifische Zugang zu einem unterschiedlichen E-Mail-Server gesteuert wird. Das heißt, dass eine jede konsolidierte Liste 13 jeweils einen Filter 7 zu einem bestimmten E-Mail-Server 2 zugeordnet ist.

Vorzugsweise ist der DMS-Server 10 beziehungsweise sind die Kommunikationsmodule 11 und der DMS-Server 10 derart ausgebildet, dass die Endgeräte 1 eines Mandanten jeweils mittels einer spezifischen URL auf den DMS-Server 10 zugreifen und die Endgeräte eines Mandanten jeweils mit einem bestimmten der Kommunikationsmodule 11 kommunizieren. Dies heißt, dass für jeden Mandanten eine separate URL am DMS-Server eingerichtet ist.

Der Requester 9 ruft die konsolidierte Liste 13 in regelmäßigen Abständen vom Web-Server 12 auf und führt die entsprechenden Daten dem DPM-Modul 8 zu. In dem DPM-Modul 8 wird der Verbindungsstatus der konsolidierten Liste in die dynamische Verbindungsstatus-Liste eingetragen. Das DPM-Modul 8 kann anhand weiterer Compliance-Regeln die vom DMS-Server 10 empfangenen Daten überprüfen und gegebenenfalls den Kommunikationsstatus ändern. Am DPM-Modul 8 sind als statische Verbindungsstatus-Listen vor allem eine Whitelist und eine Blacklist vorgesehen. Die Whitelist enthält Einträge der Endgeräte, die mit dem E-Mail-Server 2 kommunizieren dürfen. Die Blacklist enthält Einträge von Endgeräten, die mit dem E-Mail-Server 2 nicht kommunizieren dürfen.

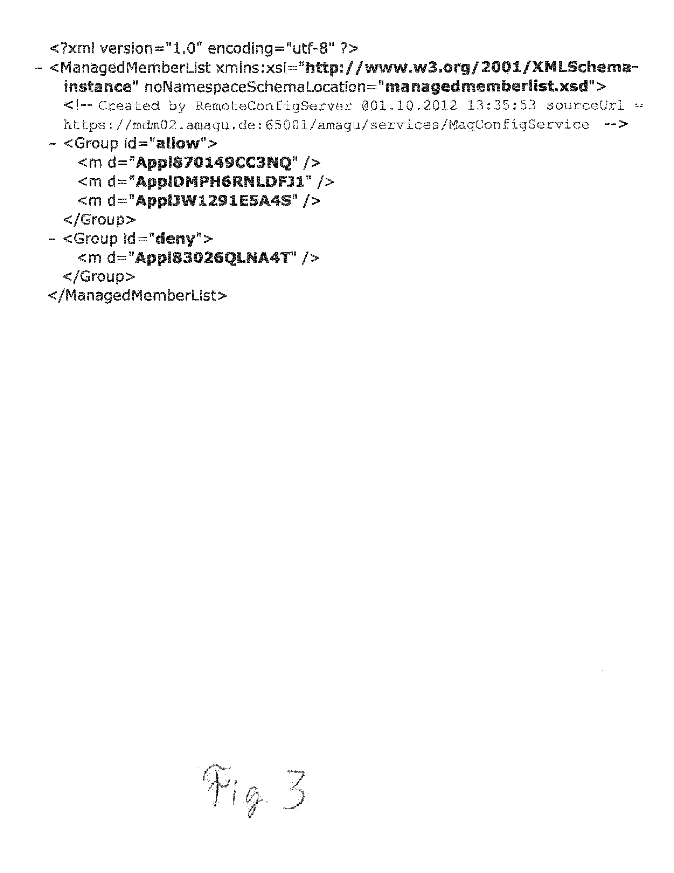

Die konsolidierte Liste 13 wird vorzugsweise als xml-Datei oder in einer anderen Auszeichnungssprache am Web-Server 12 vorgehalten. Figur 3 zeigt beispielhaft eine solche konsolidierte Liste 13. In dieser Datei bedeutet "ManagedMemberList xmlns: xsi=http: //www.w3.org./2001/XMLSchema-instance" noNamespaceSchemaLocation="managedmemberlist.xsd" einen Verweis auf das Schema, mit welchen diese xml-Datei darzustellen ist. In den Anmerkungen zwischen den Tags "< !- -" und "- - >" sind die Informationen enthalten, aus welchen Quellen die jeweiligen Gerätestatusse ausgelesen sind. Im vorliegenden Ausführungsbeispiel ist es lediglich ein einzelner Mandant, der als "amagu" bezeichnet wird. Diese Anmerkungen werden automatisch erstellt und geben dem Operator die Quelle dieser xml-Datei an.

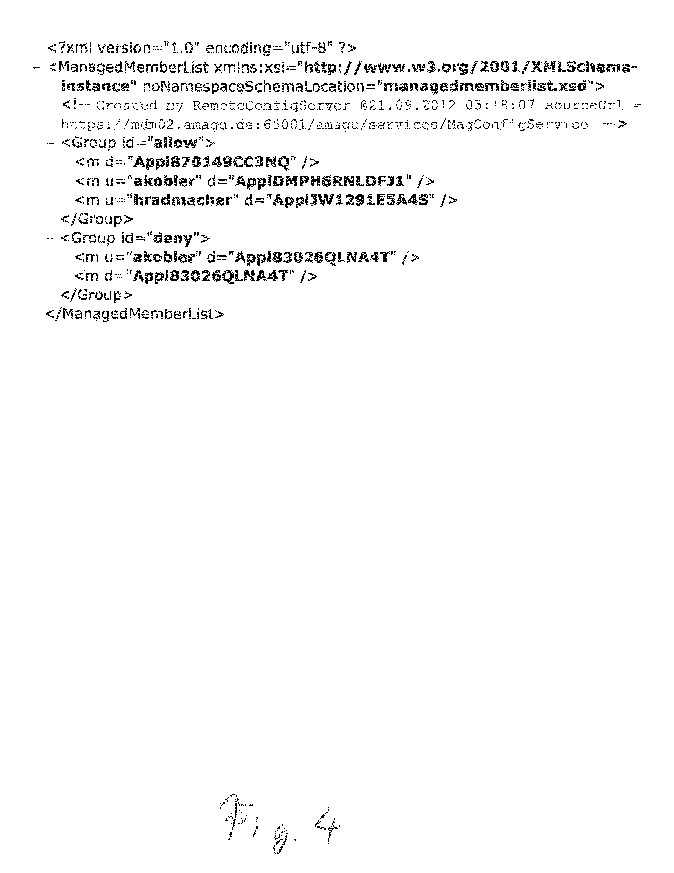

Danach folgen die zwei Gruppen, wobei bei der ersten Gruppe die Identifikation "allow" und der zweiten Gruppe die Identifikation "deny" zugeordnet ist. In der Gruppe "allow" sind im vorliegenden Ausführungsbeispiel drei gerätespezifische Identifikationsnummern und in der Gruppe "deny" eine einzige gerätespezifische Identifikationsnummer aufgeführt. Sie sind jeweils in einem bestimmten xml-typischen Format angegeben, wobei der Buchstabe "d" vor der Zuordnung mittels dem "=" für gerätespezifische Identifikation (device ID) steht. Falls zusätzlich eine benutzerspezifische Identifikation erfolgen soll, können benutzerspezifische Daten auch in diesen oder weiteren Gruppen aufgenommen werden, wobei dann im vorliegenden Ausführungsbeispiel das "d" durch ein "u" ergänzt wird, um benutzerspezifische Identifikationen zu kennzeichnen. Figur 4 zeigt eine konsolidierte Liste mit sowohl gerätespezifischen Identifikationen als auch den optionalen benutzerspezifischen Identifikationen.

Die erste Gruppe, die mit "allow" gekennzeichnet ist, stellt die Whitelist dar und die zweite Gruppe, der mit "deny" gekennzeichnet ist, stellt die Blacklist dar. Die Ausführungsbeispiele gemäß Figur 3 und 4 umfassen lediglich vier Einträge. Selbst wenn diese Listen durch einige tausend Einträge ergänzt sind, ist die Datenmenge noch so gering, dass sie in kürzester Zeit vom DMS-Server zum Requester 9 übertragen werden kann.

Während einer Anmeldephase kann ausschließlich die Blacklist verwendet. Ist die Anmeldephase beendet und beginnt die normale Betriebsphase, dann kann ausschließlich die Whitelist verwendet werden, wobei alle sich während der Anmeldephase angemeldeten Endgeräte in die Whitelist eingetragen sind. Die ausschließliche Verwendung der Whitelist, bedeutet, dass ein Endgerät, das nicht in der Whitelist enthalten ist, nicht mit dem Gateway kommunizieren darf. Selbstverständlich ist es alternativ auch möglich, die Blacklist und die Whitelist permanent einzusetzen.

Der im DPM-Modul 8 vorgehaltene Kommunikationsstatus wird somit mittels des DMS-Servers 10 in regelmäßigen Abständen aktualisiert. Da am DMS-Server 10 der Verbindungsstatus der Vielzahl von Endgeräten 1 in eine gemeinsame konsolidierte Liste eingetragen wird und nur diese Liste bzw. eine Delta-Liste an das DPM-Modul 8 übermittelt wird, ist der Aufwand für die Datenübertragung wesentlich geringer als wenn die einzelnen Kommunikationsmodule 11 separat den jeweiligen Status an das DPM-Modul 8 melden. Hierdurch lässt sich der Verbindungsstatus am DPM-Modul 8 für eine Vielzahl von Endgeräten zuverlässig aktualisieren und der Datentransfer zwischen dem DMS-Server 10 und dem DPM-Modul 8 wirkt sich nicht beschränkend auf die Anzahl der Endgeräte 1 aus. Zudem kann am DMS-Server eine umfangreiche Prüfung des jeweiligen Gerätestatus der Endgeräte 1 erfolgen, ohne dass der Betrieb des E-Mail-Servers hierdurch beeinträchtigt wird.

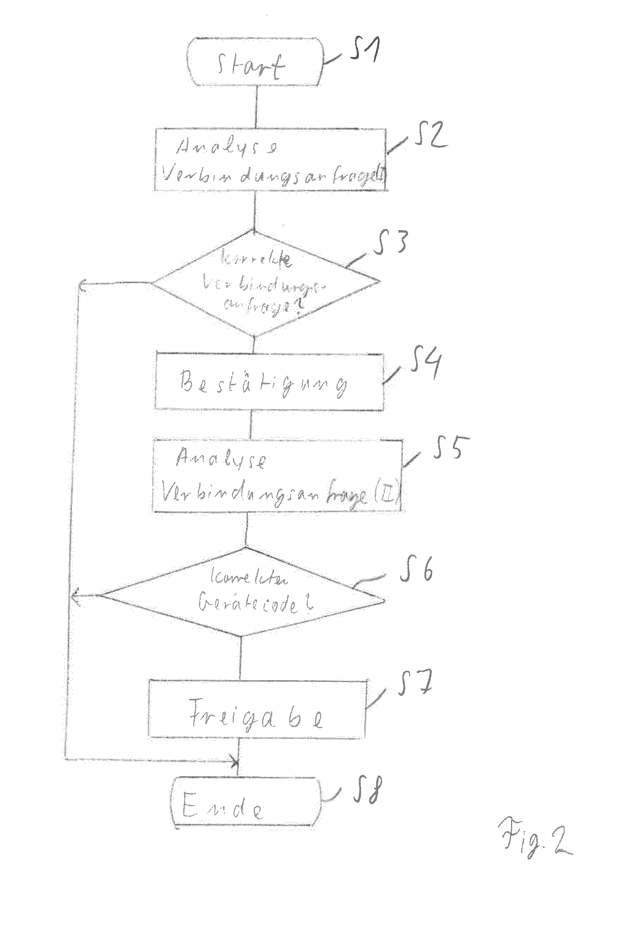

Zum Aufbau einer Verbindung zwischen einem der Endgeräte und dem E-Mail-Server 2 erzeugt das Client-Programm am Endgerät 1 eine Verbindungsanfrage, die über das Internet 15 an den Web-Server 5 übermittelt wird. Hierdurch wird das in Fig. 2 dargestellte Verfahren zum Prüfen der Verbindungsanfrage ausgelöst (S1 Start).

Die Verbindungsanfrage wird beispielsweise als http-Request übertragen. Ein solcher http-Request kann folgendermaßen aussehen:
http Request:
POST /servlet/traveler/Microsoft-Server-ActiveSync HTTP/1.1
Host: traveler.amagu.de
User-Agent: Mozilla/5.0 (iPhone; U; CPU like Mac OS X; en) AppleWebKit/420+ (KHTML, like Gecko) Version/3.0 Mobile/1A543a Safari/419.3
Content-Type: application/x-www-form-urlencoded
Content-Length: 59
Cmd=Sync&User=rmjones&DeviceId=v140Device&DeviceType=iPhone

Im Schritt S2 wird die Verbindungsanfrage analysiert und aus der angeforderten/aufgerufenen URL die Methode, der Pfad, die Query und der User Agent extrahiert. Diese analysierte bzw. "geparste" URL enthält folgende Informationen:
Analysierte URL:
**Method:** POST
**UserAgent**:Mozilla/5.0 (iPhone; U; CPU like Mac OS X; en) AppleWebKit/420+ (KHTML, like Gecko) Version/3.0 Mobile/1A543a Safari/419.3
**Path:**/servlet/traveler/Microsoft-Server-ActiveSync
**Query**:Cmd=Sync&User=rmjones&DeviceId=v140Device&DeviceType=iPhone

Diese Verbindungsanfrage wurde mit dem http-Befehl POST übermittelt. Die Informationen zum User Agent umfassen den Typ des am Endgerät verwendeten Web-Browsers, den Endgerättyp und CPU-Daten und weitere Informationen zu Softwarekonfiguration an diesem Endgerät.

Im Pfad ist das vorliegende Ausführungsbeispiel verwendete Gateway "Traveler" genannt und dieses Gateway 4 soll mit der Funktion Microsoft-Server-ActiveSync aufgerufen werden, mit welcher eine Autorisierung und eine Synchronisation nach dem ActiveSync®-Standard durchgeführt wird.

In der Query sind der CND-Befehl "Sync", der Benutzer "rmjones", die Geräteindentifikationsnummer "v140" und der Gerätetyp "iPhone" angegeben.

Das Filtermodul 17 leitet die Werte des User Agent und des Pfades an das DPM-Modul 8 weiter, das anhand dieser Werte prüft, ob eine korrekte Verbindungsanfrage vorliegt (Schritt S3). Ist dies nicht der Fall, wird das Authentisierungsverfahren abgebrochen und der Verfahrensablauf geht auf den Schritt S4 (Ende) über.

Liegt hingegen eine korrekte Verbindungsanfrage vor, dann übermittelt das Filtermodul 17 eine entsprechende Bestätigung an das jeweilige Endgerät 1 (Schritt S5). Hierauf kann das Endgerät weitere Informationen an den Web-Server 5 übermitteln, die vom Filtermodul 17 erfasst und analysiert werden. Ob eine weitere Kommunikation zwischen dem Endgerät 1 und dem Web-Server 5 notwendig ist, hängt vom jeweils verwendeten Standard ab. Grundsätzlich ist es möglich, dass alle Informationen bereits in der ersten Verbindungsanfrage übermittelt werden. In den meisten Standards ist es jedoch so, dass zunächst eine Verbindungsanfrage gestellt wird und nach Erhalt einer Bestätigung mit einer oder mehreren weiteren Nachrichten zusätzliche Informationen, insbesondere gerätespezifische Informationen, übermittelt werden. Daher ist es zweckmäßig, neben der Eingangsprüfung im Schritt S2 und S3 eine zusätzliche Freigabeprüfung im Schritt S6 und S7 durchzuführen. Im Schritt S6 werden die entsprechenden Daten analysiert, d.h., die relevanten Daten, insbesondere ein gerätespezifischer Code, werden aus den vom Endgerät 1 übermittelten Informationen extrahiert (Schritt S6) und an das DPM-Modul 8 zur Prüfung übermittelt. Ist der gerätespezifische Code nicht korrekt, dann wird das Verfahren abgebrochen und der Verfahrensablauf geht auf den Schritt S4 über. Ergibt die Autorisierungsanfrage jedoch, dass die Verbindungsanfrage freigegeben werden kann, wobei zumindest ein korrekter gerätespezifischer Code vorliegen muss, dann wird die Verbindungsanfrage im Schritt S8 freigegeben. Hierbei wird die Verbindungsanfrage zusammen mit den entsprechenden Kommunikationsdaten des jeweiligen Endgerätes 1 an das Gateway 4 weitergeleitet, das dann eine Verbindung zu diesem Endgerät 1 herstellt, um E-Mail-Daten zwischen dem Endgerät 1 und dem E-Mail-Server 2 auszutauschen bzw. zu synchronisieren.

Da der Filter 7 unabhängig vom Gateway 4 ausgebildet und mittels der Programm-Schnittstelle 6 an den Web-Server 5 gekoppelt ist, können, wie es oben bereits erläutert ist, die Verbindungsanfragen sehr schnell beantwortet werden. Insbesondere ist es zweckmäßig, wenn der Verbindungsstatus aller Endgeräte in den Arbeitsspeicher des Server-Computers 3 geladen wird, so dass selbst bei einer Vielzahl von Endgeräten die Prüfung gemäß Schritt S7 schnell erfolgen kann. Hierzu ist es zweckmäßig, die Daten zum Verbindungsstatus in einer oder mehreren möglichst kompakten Listen darzustellen, so dass die Liste in einer kleinen Datei enthalten sein kann, die wenig Speicherplatz benötigt.

Ein Prototyp des oben erläuterten Ausführungsbeispiels wurde realisiert, wobei als E-Mail-Server ein IBM^{®} Lotusdomino-Server 8.5.3 und als Gateway das Gateway IBM^{®} Lotusnote Traveler 8.5.3 verwendet worden sind. Mit diesem System gab es keinerlei praktische Beschränkung in der Anzahl der mobilen Endgeräte. Sowohl die Aktualisierung des Verbindungsstatus am DPM-Modul 8 als auch die Prüfung der Verbindungsanfragen konnten mit einem handelsüblichen Server-Computer ohne nennenswerte Verzögerung ausgeführt werden.

Die Erfindung kann folgendermaßen kurz zusammengefasst werden:

Die Erfindung betrifft ein System und ein Verfahren zum Freigeben einer Datenverbindung zwischen einem Endgerät und einem Gateway eines E-Mail-Servers. Hierzu ist ein Filter vorgesehen, der an einen Standard-Web-Server über eine Programm-schnittstelle (API) gekoppelt ist. Eine vom Filter freigegebene Verbindungsanfrage wird an das Gateway zur Durchführung der weiteren Kommunikation mit dem jeweiligen Endgerät weitergeleitet. Die Autorisierungsprüfung der Verbindungsanfrage umfasst zumindest die Prüfung eines für das jeweilige Endgerät spezifischen Codes.

Bei der Durchführung der Autorisierungsprüfung wird auf vorgehaltene Daten zum Verbindungsstatus der einzelnen Endgeräte zugegriffen. Diese Daten werden vorzugsweise auf einem unabhängigen DMS-Server gesammelt und in einer konsolidierten Liste zusammengefasst.

### Bezugszeichenliste

- 1: Endgerät
- 2: E-Mail-Server
- 3: Server-Computer
- 4: Gateway
- 5: Web-Server
- 6: Programm-Schnittstelle
- 7: Filter
- 8: DPM-Modul
- 9: Requester
- 10: DMS-Server
- 11: Kommunikationsmodul
- 12: Web-Service
- 13: konsolidierte Liste
- 14: Compliance-Modul
- 15: Internet
- 16: Grabber-Modul
- 17: Filter-Modul

## Patentansprüche

1. System zum Freigeben einer Datenverbindung zwischen einem Endgerät und einem Gateway eines E-Mail-Servers mit
einem Filter (7) zum Filtern von Verbindungsanfragen von Endgeräten (1), wobei der Filter (7) unabhängig vom Gateway (4) ausgebildet und über eine Programmschnittstelle (API) (6) an einen Standard-Webserver (5) gekoppelt ist, wobei der Filter (7) derart ausgebildet ist, dass er nach einer Autorisierung-Prüfung der Verbindungsanfrage diese ablehnen oder freigeben kann, wobei eine freigegebene Verbindungsanfrage an das Gateway (4) zur Durchführung der weiteren Kommunikation mit dem jeweiligen Endgerät (1) weiter gegeben wird, und
die Autorisierung-Prüfung der Verbindungsanfrage zumindest die Prüfung eines für das jeweilige Endgerät (1) spezifischen Codes umfasst.

2. System nach Anspruch 1,
**dadurch gekennzeichnet,**
**dass** die Verbindungsanfragen einem Synchronisations-Protokoll zum Synchronisieren von Daten an einem mobilen Endgerät mit einem E-Mail-Server, wie z.B. dem ActiveSync^{®}-Protokoll oder dem OpenSync-Protokoll, entsprechen.

3. System nach Anspruch 1 oder 2,
**dadurch gekennzeichnet,**
**dass** die Verbindungsanfragen auf dem http-Protokoll oder dem https-Protokoll basieren.

4. Verfahren zum Freigeben einer Datenverbindung zwischen einem Endgerät und einem Gateway eines E-Mail-Servers, wobei
ein Filter (7) zum Filtern von Verbindungsanfragen von Endgeräten (1) verwendet wird, der Filter (7) unabhängig vom Gateway (4) ausgebildet und über eine Programmschnittstelle (API) (6) an einen Standard-Webserver (5) gekoppelt ist, und dass eine Verbindungsanfrage eines Endgerätes (1) an den E-Mail-Server (2) geprüft wird und in Abhängigkeit vom Ergebnis der Autorisierung-Prüfung abgelehnt oder freigeben wird, wobei eine freigegebene Verbindungsanfrage an das Gateway (4) zur Durchführung der weiteren Kommunikation mit dem jeweiligen Endgerät (1) weiter gegeben wird, und
die Autorisierung-Prüfung der Verbindungsanfrage zumindest die Autorisierung-Prüfung eines für das jeweilige Endgerät (1) spezifischen Codes umfasst.

5. Verfahren nach Anspruche 4,
**dadurch gekennzeichnet,**
**dass** die Autorisierung-Prüfung eine Eingangsprüfung umfasst, bei der eine mit der Verbindungsanfrage übermittelte URL zumindest bzgl. eines in der URL genannten User-Agent und/oder dem in der URL genannten Gateway geprüft wird, wobei der User-Agent das jeweilige Endgerät beschreibt.

6. Verfahren nach Anspruch 5,
**dadurch gekennzeichnet,**
**dass** bei der Autorisierung-Prüfung der für das jeweilige Endgerät (1) spezifische Code nach der Eingangsprüfung geprüft wird.

7. Verfahren nach einem der Ansprüche 4 bis 6,
**dadurch gekennzeichnet,**
**dass** das Verfahren auf einem Server-Computer (3) ausgeführt wird und bei der Autorisierung-Prüfung die zu prüfenden Daten in einem Cache-Speicher des Server-Computers (3) während der Autorisierung-Prüfung gespeichert werden.

8. Verfahren nach einem der Ansprüche 4 bis 7,
**dadurch gekennzeichnet,**
**dass** der Filter (7) ein DPM-Modul (Device Permission Manager) (8) umfasst, in dem Identifikationsdaten aller zugelassenen und/oder nicht-zugelassenen Geräte enthalten sind, und der Filter bei der Autorisierung-Prüfung einen für das jeweilige für das jeweilige Endgerät spezifischen Code mit diesen Identifikationsdaten vergleicht.

9. Verfahren, insbesondere nach einem der Ansprüche 4 bis 8,
**dadurch gekennzeichnet,**
**dass** an einem DMS-Server (10) mehrere Kommunikationsmodule (11) vorgesehen sind, welche jeweils mit zumindest einem Endgerät (1) kommunizieren, um einen Gerätestatus des jeweiligen Endgerätes (1) an den DMS-Server (10) zu übermitteln, und anhand des Gerätestatus ein Verbindungsstatus mit zumindest den Werten "verbinden" oder "trennen" bestimmt und in eine konsolidierte Liste (13) eingetragen wird, die an einen an einem E-Mail-Server (2) vorgesehenen Filter (7) übermittelt wird, wobei bei einer Verbindungsanfrage eines Endgerätes (1) am E-Mail-Server (2) der dem jeweiligen Endgerät (1) zugeordnete Verbindungsstatus bei der Autorisierung des jeweiligen Endgerätes (1) mittels des Filters (7) berücksichtigt wird.

10. Verfahren nach Anspruch 9,
**dadurch gekennzeichnet,**
**dass** die Kommunikationsmodule (11) unterschiedlich konfigurierbar sind und jeweils mit mehreren der Endgeräte (1) eines Mandanten kommunizieren, so dass unterschiedliche Zusammenstellungen des Gerätestatus von den Endgeräten unterschiedlicher Mandanten übertragen werden können und/oder auf unterschiedliche Weise, insbesondere nach unterschiedlichen Sicherheitsregeln, zwischen den Endgeräten unterschiedlicher Mandanten kommuniziert werden kann, und die übertragenen Gerätestatusse der Endgeräte eines Mandanten jeweils in eine Mandantendatei eingetragen werden, wobei für mehrere Mandanten jeweils eine Mandantendatei vorgehalten wird,
ein Compliance-Modul (14) anhand des Gerätestatus des jeweiligen Endgerätes (1) den Verbindungsstatus bestimmt oder überprüft und in die entsprechende Mandantendatei einträgt, und
ein Grabber-Modul (16) den Verbindungsstatus aus den mehreren Mandantendateien ausliest und in die konsolidiert Liste (13) einträgt.

11. Verfahren nach Anspruch 10,
**dadurch gekennzeichnet,**
**dass** der Gerätestatus Konfigurations- und/oder Kommunikationsdaten der jeweiligen Endgeräte enthält und diese Daten werden von dem Compliance-Modul (14) nach vorbestimmten Compliance-Regeln geprüft werden und sollten diese nicht den Compliance-Regeln genügen, dann wird der Verbindungsstatus in der konsolidierten Liste (13) für das entsprechende Endgerät auf "trennen" gesetzt.

12. Verfahren nach einem der Ansprüche 9 bis 11,
**dadurch gekennzeichnet,**
**dass** der Gerätestatus zumindest einen gerätespezifischen Identifikation, wie z.B. eine Seriennummer, Device ID, IMEI, Gerätetyp-Code, umfasst, die zur Übermittlung an den E-Mail-Server in die konsolidierte Liste eingetragen wird.

13. Verfahren nach einem der Ansprüche 9 bis 12,
**dadurch gekennzeichnet,**
**dass** auf eine Verbindungsanfrage am E-Mail-Server mit einer benutzerspezifischen Autorisierung geprüft wird, ob ein Benutzer autorisiert ist, auf die Daten des E-Mail-Servers zuzugreifen, und nur wenn sowohl das vom Benutzer verwendete Endgerät als auch der Benutzer selbst autorisiert sind, wird dem Benutzer der Zugriff auf den E-Mail-Server erlaubt.

14. Verfahren nach einem der Ansprüche 4 bis 13,
**dadurch gekennzeichnet,**
**dass** am E-Mail-Server eine von der konsolidierten Liste unabhängige, statische Liste vorgehalten wird, in welcher ein Verbindungsstatus von bestimmten Endgeräten eingetragen ist, wobei am E-Mail-Server festgelegt ist, welche Liste Vorrang hat, wenn zu einem bestimmten Endgerät ein Verbindungsstatus in beiden Listen enthalten ist.

15. Verfahren nach einem der Ansprüche 4 bis 14,
**dadurch gekennzeichnet,**
**dass** ein System nach einem der Ansprüche 1 bis 3 zum Ausführen des Verfahrens verwendet wird.
